(19) Europäisches Patentamt
European Patent Office
Office européen des brevets

(11)  EP 3 875 240 A1

(12)  EUROPEAN PATENT APPLICATION
published in accordance with Art. 153(4) EPC

(43) Date of publication:
08.09.2021 Bulletin 2021/36

(51) Int Cl.:
B29C 41/18 (2006.01)        B32B 5/18 (2006.01)
B32B 27/30 (2006.01)        B32B 27/36 (2006.01)
B32B 27/40 (2006.01)        C08K 5/12 (2006.01)
C08L 27/06 (2006.01)        C08L 67/02 (2006.01)

(21) Application number: 19880077.3

(22) Date of filing: 21.10.2019

(86) International application number:
PCT/JP2019/041386

(87) International publication number:
WO 2020/090556 (07.05.2020 Gazette 2020/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.10.2018  JP 2018205961

(71) Applicant: Zeon Corporation
Tokyo 100-8246 (JP)

(72) Inventor: FUJIWARA Takanori
Tokyo 100-8246 (JP)

(74) Representative: Maiwald Patent- und
Rechtsanwaltsgesellschaft mbH
Elisenhof
Elisenstraße 3
80335 München (DE)

(54) VINYL CHLORIDE RESIN COMPOSITION FOR POWDER MOLDING, VINYL CHLORIDE RESIN MOLDED ARTICLE, AND LAMINATE

(57) Provided is a vinyl chloride resin composition for powder molding with which it is possible to form a vinyl chloride resin molded product having excellent fogging characteristics and heat shrinkage resistance. The vinyl chloride resin composition for powder molding contains a vinyl chloride resin, a trimellitic acid ester, and a polyester including a structural unit derived from adipic acid and a structural unit derived from 3-methyl-1,5-pentanediol. The vinyl chloride resin composition for powder molding is preferably used in powder slush molding.

**Description**

TECHNICAL FIELD

The present disclosure relates to a vinyl chloride resin composition for powder molding, a vinyl chloride resin molded product, and a laminate.

BACKGROUND

Vinyl chloride resins are used in a variety of applications due to generally having excellent characteristics in terms of cold resistance, heat resistance, oil resistance, and so forth.

Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims.

A vinyl chloride resin molded product that constitutes a surface skin of an automobile interior component such as an automobile instrument panel is produced, for example, by performing powder molding by a known molding method such as powder slush molding with respect to a vinyl chloride resin composition that contains a vinyl chloride resin, a plasticizer, and additives such as a pigment (for example, refer to Patent Literature (PTL) 1).

In one specific example described in PTL 1, a surface skin formed of a vinyl chloride resin molded product is produced through powder slush molding of a vinyl chloride resin composition that contains vinyl chloride resin particles, a trimellitic acid ester plasticizer, and additives such as a pigment formed of a mixture of phthalocyanine blue, titanium oxide, and carbon.

CITATION LIST

Patent Literature

PTL 1: JP-H8-291243A

SUMMARY

(Technical Problem)

It is desirable for a vinyl chloride resin molded product used as a surface skin of an automobile interior component or the like to have excellent fogging characteristics and heat shrinkage resistance.

However, there is room for improvement of the heat shrinkage resistance of a vinyl chloride resin molded product that is obtained through powder slush molding of the conventional vinyl chloride resin composition described above.

Accordingly, one object of the present disclosure is to provide a vinyl chloride resin composition for powder molding with which it is possible to form a vinyl chloride resin molded product having excellent fogging characteristics and heat shrinkage resistance.

Another object of the present disclosure is to provide a vinyl chloride resin molded product and a laminate having excellent fogging characteristics and heat shrinkage resistance.

(Solution to Problem)

The inventor conducted diligent investigation with the aim of solving the problem set forth above. The inventor discovered that a vinyl chloride resin molded product excelling in terms of both fogging characteristics and heat shrinkage resistance can be obtained by powder molding a vinyl chloride resin composition in which a trimellitic acid ester and a specific polyester are used in combination as plasticizers, and, in this manner, completed the present disclosure.

Specifically, the present disclosure aims to advantageously solve the problem set forth above, and a presently disclosed vinyl chloride resin composition for powder molding comprises: a vinyl chloride resin; a trimellitic acid ester; and a polyester including a structural unit derived from adipic acid and a structural unit derived from 3-methyl-1,5-pentanediol. Through inclusion of a trimellitic acid ester and a polyester that includes a structural unit derived from adipic acid and a structural unit derived from 3-methyl-1,5-pentanediol in this manner, it is possible to improve fogging characteristics and heat shrinkage resistance of a vinyl chloride resin molded product that is obtained through powder molding of the vinyl chloride resin composition for powder molding.

In the presently disclosed vinyl chloride resin composition for powder molding, it is preferable that not less than 30 parts by mass and not more than 200 parts by mass, in total, of the trimellitic acid ester and the polyester are contained per 100 parts by mass of the vinyl chloride resin. When the total content of the trimellitic acid ester and the polyester is within the range set forth above, fogging characteristics and heat shrinkage resistance of a vinyl chloride resin molded product can be improved while also increasing low-temperature flexibility of the vinyl chloride resin molded product.

In the presently disclosed vinyl chloride resin composition for powder molding, content of the polyester as a proportion relative to total content of the trimellitic acid ester and the polyester is preferably not less than 0.1 mass% and not more than 80 mass%. When the proportional content of the polyester is within the range set forth above, a balance of high levels of fogging characteristics and heat shrinkage resistance of a vinyl chloride resin molded product can be achieved while also increasing low-temperature flexibility of the vinyl chloride resin molded product.

The presently disclosed vinyl chloride resin composition for powder molding is preferably used in powder slush molding. By using the vinyl chloride resin composition for powder molding in powder slush molding, it is easier to obtain a vinyl chloride resin molded product that can be used well as an automobile interior material such as a surface skin for an automobile instrument panel, for example.

Moreover, the present disclosure aims to advantageously solve the problem set forth above, and a presently disclosed vinyl chloride resin molded product is obtained through powder molding of any one of the vinyl chloride resin compositions for powder molding set forth above. A vinyl chloride resin molded product that is obtained through powder molding of the vinyl chloride resin composition for powder molding set forth above has excellent fogging characteristics and heat shrinkage resistance.

The presently disclosed vinyl chloride resin molded product is preferably for a surface skin of an automobile interior component. This is because an automobile interior component, such as an automobile instrument panel, for which heat shrinkage and fogging do not readily occur can be produced by using the vinyl chloride resin molded product as a surface skin of the automobile interior component.

Furthermore, the present disclosure aims to advantageously solve the problem set forth above, and a presently disclosed laminate comprises: a foamed polyurethane molded product; and any one of the vinyl chloride resin molded products set forth above. A laminate that includes a foamed polyurethane molded product and the vinyl chloride resin molded product set forth above can suitably be used as an automobile interior material that is used in production of an automobile interior component, such as an automobile instrument panel, for which heat shrinkage and fogging do not readily occur.

(Advantageous Effect)

Through the presently disclosed vinyl chloride resin composition for powder molding, it is possible to form a vinyl chloride resin molded product having excellent fogging characteristics and heat shrinkage resistance.

Moreover, through the present disclosure, it is possible to provide a vinyl chloride resin molded product and a laminate having excellent fogging characteristics and heat shrinkage resistance.

DETAILED DESCRIPTION

The following provides a detailed description of embodiments of the present disclosure.

The presently disclosed vinyl chloride resin composition for powder molding can be used in powder molding of the presently disclosed vinyl chloride resin molded product, for example. Moreover, a vinyl chloride resin molded product obtained through powder molding using the presently disclosed vinyl chloride resin composition for powder molding can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

(Vinyl chloride resin composition for powder molding)

The presently disclosed vinyl chloride resin composition for powder molding contains (a) a vinyl chloride resin, (b) a trimellitic acid ester, and (c) a polyester including specific structural units, and may optionally further contain additives. As a result of the presently disclosed vinyl chloride resin composition for powder molding containing at least the (a) vinyl chloride resin, (b) trimellitic acid ester, and (c) polyester including specific structural units, it is possible to powder mold a vinyl chloride resin molded product excelling in terms of both fogging characteristics and heat shrinkage resistance using the composition. Therefore, the presently disclosed vinyl chloride resin composition for powder molding can be used to obtain a vinyl chloride resin molded product that is suitable, for example, as an automobile interior material, such as a surface skin for an automobile instrument panel or a surface skin for a door trim, having excellent fogging characteristics and heat shrinkage resistance.

Note that from a viewpoint of easily obtaining a vinyl chloride resin molded product that can be used well as an automobile interior material using the presently disclosed vinyl chloride resin composition for powder molding, for example, the presently disclosed vinyl chloride resin composition for powder molding is preferably used in powder slush molding.

<(a) Vinyl chloride resin>

The (a) vinyl chloride resin is normally a particulate vinyl chloride resin. For example, one type or two or more types of vinyl chloride resin particles may be contained as the (a) vinyl chloride resin, and one type or two or more types of vinyl chloride resin fine particles may optionally be further contained as the (a) vinyl chloride resin. In particular, the (a) vinyl chloride resin preferably includes at least vinyl chloride resin particles, and more preferably includes vinyl chloride resin particles and vinyl chloride resin fine particles.

The (a) vinyl chloride resin may be produced by any production method known in the art such as suspension polymerization, emulsion polymerization, solution polymerization, or bulk polymerization.

The present description uses the term "resin particles" to refer to particles with a particle diameter of 30 $\mu$m or more, and the term "resin fine particles" to refer to particles with a particle diameter of less than 30 $\mu$m.

Examples of the (a) vinyl chloride resin include homopolymers composed of vinyl chloride monomer units and also vinyl chloride-based copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride-based copolymer include those described in WO2016/098344A1, for example. One of these components may be used individually, or two or more of these components may be used in combination in a freely selected ratio.

<<Vinyl chloride resin particles>>

In the vinyl chloride resin composition for powder molding, the vinyl chloride resin particles normally function as a matrix resin (base material). The vinyl chloride resin particles are preferably produced by suspension polymerization.

[Average degree of polymerization]

The average degree of polymerization of a vinyl chloride resin forming the vinyl chloride resin particles is preferably 800 or more, and more preferably 1,000 or more, and is preferably 5,000 or less, more preferably 3,000 or less, and even more preferably 2,800 or less. This is because sufficient physical strength of a vinyl chloride resin molded product formed using the vinyl chloride resin composition for powder molding can be ensured while also improving tensile characteristics (particularly tensile elongation), for example, when the average degree of polymerization of the vinyl chloride resin forming the vinyl chloride resin particles is not less than any of the lower limits set forth above. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. Moreover, when the average degree of polymerization of the vinyl chloride resin forming the vinyl chloride resin particles is not more than any of the upper limits set forth above, meltability of the vinyl chloride resin composition for powder molding can be improved.

The "average degree of polymerization" referred to in the present disclosure can be measured in accordance with JIS K6720-2.

[Average particle diameter]

The average particle diameter of the vinyl chloride resin particles is normally 30 $\mu$m or more, preferably 50 $\mu$m or more, and more preferably 100 $\mu$m or more, and is preferably 500 $\mu$m or less, and more preferably 200 $\mu$m or less. This is because powder fluidity of the vinyl chloride resin composition for powder molding further improves when the average particle diameter of the vinyl chloride resin particles is not less than any of the lower limits set forth above. Moreover, meltability of the vinyl chloride resin composition for powder molding further improves and surface smoothness of a vinyl chloride resin molded product formed using the composition can be improved when the average particle diameter of the vinyl chloride resin particles is not more than any of the upper limits set forth above.

The "average particle diameter" referred to in the present disclosure can be measured as the volume-average particle diameter by laser diffraction in accordance with JIS Z8825.

[Proportional content]

The proportional content of the vinyl chloride resin particles in the (a) vinyl chloride resin is preferably 70 mass% or more, and more preferably 80 mass% or more, may be 100 mass%, and is preferably 95 mass% or less, and more preferably 90 mass% or less. This is because sufficient physical strength of a vinyl chloride resin molded product formed using the vinyl chloride resin composition for powder molding can be ensured while also improving tensile elongation when the proportional content of the vinyl chloride resin particles in the (a) vinyl chloride resin is not less than any of the lower limits set forth above. Moreover, powder fluidity of the vinyl chloride resin composition for powder molding improves when the proportional content of the vinyl chloride resin particles in the (a) vinyl chloride resin is not more than any of the upper limits set forth above.

<<Vinyl chloride resin fine particles>>

In the vinyl chloride resin composition for powder molding, the vinyl chloride resin fine particles normally function as a dusting agent (powder fluidity modifier). The vinyl chloride resin fine particles are preferably produced by emulsion polymerization.

[Average degree of polymerization]

The average degree of polymerization of a vinyl chloride resin forming the vinyl chloride resin fine particles is preferably 500 or more, and more preferably 700 or more, and is preferably 2,000 or less, and more preferably 1,800 or less. This is because powder fluidity of the vinyl chloride resin composition for powder molding improves, and tensile elongation of a molded product obtained using the composition improves when the average degree of polymerization of the vinyl chloride resin forming the vinyl chloride resin fine particles serving as a dusting agent is not less than any of the lower limits set forth above. Moreover, meltability of the vinyl chloride resin composition for powder molding improves, and surface smoothness of a vinyl chloride resin molded product formed using the composition improves when the average degree of polymerization of the vinyl chloride resin forming the vinyl chloride resin fine particles is not more than any of the upper limits set forth above.

[Average particle diameter]

The average particle diameter of the vinyl chloride resin fine particles is normally less than 30 $\mu$m, preferably 10 $\mu$m or less, and more preferably 5 $\mu$m or less, and is preferably 0.1 $\mu$m or more, and more preferably 1 $\mu$m or more. This is because the vinyl chloride resin fine particles are not too small to function as a dusting agent, for example, and the vinyl chloride resin composition for powder molding can display even better powder fluidity when the average particle diameter of the vinyl chloride resin fine particles is not less than any of the lower limits set forth above. Moreover, meltability of the vinyl chloride resin composition for powder molding further increases, and surface smoothness of a vinyl chloride resin molded product formed therewith can be further improved when the average particle diameter of the vinyl chloride resin fine particles is not more than any of the upper limits set forth above.

[Proportional content]

The proportional content of the vinyl chloride resin fine particles in the (a) vinyl chloride resin may be 0 mass%, but is preferably 5 mass% or more, and more preferably 10 mass% or more, and is preferably 30 mass% or less, and more preferably 20 mass% or less. This is because powder fluidity of the vinyl chloride resin composition for powder molding further improves when the proportional content of the vinyl chloride resin fine particles in the (a) vinyl chloride resin is not less than any of the lower limits set forth above. Moreover, physical strength of a vinyl chloride resin molded product formed using the vinyl chloride resin composition for powder molding can be further increased when the proportional content of the vinyl chloride resin fine particles in the (a) vinyl chloride resin is not more than any of the upper limits set forth above.

<(b) Trimellitic acid ester>

The (b) trimellitic acid ester that is contained in the vinyl chloride resin composition for powder molding normally functions as a plasticizer. The (b) trimellitic acid ester is preferably an ester compound of trimellitic acid and a monohydric alcohol.
Specific examples of the monohydric alcohol include, but are not specifically limited to, aliphatic alcohols such as 1-hexanol, 1-heptanol, 1-octanol, 2-ethylhexanol, 1-nonanol, 1-decanol, 1-undecanol, and 1-dodecanol. Of these examples, an aliphatic alcohol having a carbon number of 6 to 18 is preferable as the monohydric alcohol, and a linear aliphatic alcohol having a carbon number of 6 to 18 is more preferable as the monohydric alcohol.

In particular, the (b) trimellitic acid ester is preferably a triester compound in which substantially all the carboxy groups of trimellitic acid are esterified with the monohydric alcohol. Alcohol residue portions of the triester compound may all be derived from the same alcohol or may each be derived from a different alcohol.

The (b) trimellitic acid ester may be one compound or a mixture of different compounds.

Specific examples of the (b) trimellitic acid ester that are suitable include tri-n-hexyl trimellitate, tri-n-heptyl trimellitate, tri-n-octyl trimellitate, tri(2-ethylhexyl) trimellitate, tri-n-nonyl trimellitate, tri-n-decyl trimellitate, triisodecyl trimellitate, tri-n-undecyl trimellitate, tri-n-dodecyl trimellitate, trialkyl trimellitates (esters including two or more types of alkyl groups having different carbon numbers [with a proviso that the carbon number is 6 to 18] in a molecule), tri-n-alkyl trimellitates (esters including at least two types of alkyl groups having different carbon numbers [with a proviso that the carbon number is 6 to 18] in a molecule), and mixtures thereof.

Specific examples of the (b) trimellitic acid ester that are more preferable include tri-n-octyl trimellitate, tri(2-ethylhexyl) trimellitate, tri-n-nonyl trimellitate, tri-n-decyl trimellitate, tri-n-alkyl trimellitates (esters including at least two types of alkyl groups having different carbon numbers [with a proviso that the carbon number is 6 to 18] in a molecule), and mixtures thereof.

The content of the (b) trimellitic acid ester relative to 100 parts by mass of the (a) vinyl chloride resin is preferably not less than 30 parts by mass and not more than 200 parts by mass, more preferably not less than 40 parts by mass and not more than 100 parts by mass, even more preferably not less than 50 parts by mass and not more than 84 parts by mass, and most preferably not less than 75 parts by mass and not more than 82 parts by mass. When the content of the (b) trimellitic acid ester is not less than any of the lower limits set forth above, fogging characteristics and low-temperature flexibility of a vinyl chloride resin molded product improve. Moreover, the (b) trimellitic acid ester is absorbed well by the (a) vinyl chloride resin, and powder moldability of the vinyl chloride resin composition for powder molding improves. Furthermore, when the content of the (b) trimellitic acid ester is not more than any of the upper limits set forth above, heat shrinkage resistance of a vinyl chloride resin molded product improves.

Note that from a viewpoint where, in particular, fogging characteristics and flexibility are more important, the content of the (b) trimellitic acid ester relative to 100 parts by mass of the (a) vinyl chloride resin is preferably not less than 30 parts by mass and not more than 200 parts by mass, more preferably not less than 40 parts by mass and not more than 100 parts by mass, even more preferably not less than 50 parts by mass and not more than 84 parts by mass, particularly preferably not less than 70 parts by mass and not more than 83 parts by mass, and most preferably not less than 75 parts by mass and not more than 82 parts by mass. Moreover, from a viewpoint where, in particular, heat shrinkage resistance is more important, the content of the (b) trimellitic acid ester relative to 100 parts by mass of the (a) vinyl chloride resin is preferably not less than 30 parts by mass and not more than 200 parts by mass, more preferably not less than 40 parts by mass and not more than 100 parts by mass, even more preferably not less than 50 parts by mass and not more than 84 parts by mass, particularly preferably not less than 55 parts by mass and not more than 83 parts by mass, and most preferably not less than 75 parts by mass and not more than 82 parts by mass.

<(c) Polyester including specific structural units>

The (c) polyester including specific structural units that is contained in the vinyl chloride resin composition for powder molding normally functions as a plasticizer. The (c) polyester including specific structural units includes a structural unit derived from adipic acid and a structural unit derived from 3-methyl-1,5-pentanediol.

Note that although the (c) polyester including specific structural units may include structural units other than the structural unit derived from adipic acid and the structural unit derived from 3-methyl-1,5-pentanediol, the total of the structural unit derived from adipic acid and the structural unit derived from 3-methyl-1,5-pentanediol is preferably 50 mass% or more of all structural units, and more preferably 80 mass% or more of all structural units. Moreover, it is preferable that the (c) polyester including specific structural units only includes the structural unit derived from adipic acid and the structural unit derived from 3-methyl-1,5-pentanediol as repeating units.

The (c) polyester including specific structural units can be obtained through condensation polymerization of adipic acid and 3-methyl-1,5-pentanediol without any specific limitations. This condensation polymerization can be performed in the presence of a catalyst. Moreover, the condensation polymerization can be performed using an alcohol and/or a monobasic acid as a terminal stopping component. A product that is obtained through the condensation polymerization may be subjected to after-treatment such as distillation. Commonly known conditions can be adopted as the reaction conditions of the condensation polymerization, such as the used amounts of the monomers, the catalyst, and the terminal stopping component.

Also note that a commercially available product may be used as the (c) polyester including specific structural units.

The catalyst used in the condensation polymerization reaction is not specifically limited and may be dibutyltin oxide, tetraalkyl titanate, or the like, for example.

Examples of alcohols that can be used as the terminal stopping component include methanol, ethanol, propanol, isopropanol, butanol, isobutanol, pentanol, hexanol, isohexanol, heptanol, isoheptanol, octanol, isooctanol, 2-ethylhexanol, nonanol, isononanol, decanol, isodecanol, undecanol, isoundecanol, dodecanol, tridecanol, isotridecanol, tetradecanol, pentadecanol, hexadecanol, heptadecanol, octadecanol, cellosolve, carbitol, phenol, nonylphenol, benzyl alcohol, and mixtures thereof.

Examples of monobasic acids that can be used as the terminal stopping component include acetic acid, propionic acid, butyric acid, isobutyric acid, valeric acid, pivalic acid, caproic acid, heptanoic acid, caprylic acid, 2-ethylhexanoic acid, pelargonic acid, capric acid, undecanoic acid, lauric acid, tridecanoic acid, myristic acid, pentadecanoic acid, palmitic acid, heptadecanoic acid, stearic acid, benzoic acid, and mixtures thereof.

Of these examples, 2-ethylhexanol is preferable as the terminal stopping component.

The number-average molecular weight of the (c) polyester including specific structural units is preferably 1,000 or more, and more preferably 2,000 or more, and is preferably 10,000 or less, and more preferably 7,000 or less.

Note that the "number-average molecular weight" can be measured by VPO (vapor pressure osmometry).

Moreover, the (c) polyester including specific structural units preferably has an acid value of 1 or less.

Furthermore, the (c) polyester including specific structural units preferably has a hydroxyl value of 30 or less.

The viscosity of the (c) polyester including specific structural units is preferably 500 mPa·s or more, and more preferably 1,000 mPa·s or more, and is preferably 8,000 mPa·s or less, and more preferably 5,000 mPa·s or less.

Note that the "viscosity" can be measured in accordance with JIS Z8803 at a temperature of 23°C.

The content of the (c) polyester including specific structural units relative to 100 parts by mass of the (a) vinyl chloride resin is preferably not less than 0.1 parts by mass and not more than 100 parts by mass, more preferably not less than 0.3 parts by mass and not more than 50 parts by mass, even more preferably not less than 0.5 parts by mass and not more than 35 parts by mass, and most preferably not less than 2 parts by mass and not more than 8 parts by mass. When the content of the (c) polyester including specific structural units is not less than any of the lower limits set forth above, heat shrinkage resistance of a vinyl chloride resin molded product improves. Moreover, when the content of the (c) polyester including specific structural units is not more than any of the upper limits set forth above, fogging characteristics and low-temperature flexibility of a vinyl chloride resin molded product improve.

Note that from a viewpoint where, in particular, fogging characteristics and flexibility are more important, the content of the (c) polyester including specific structural units relative to 100 parts by mass of the (a) vinyl chloride resin is preferably not less than 0.1 parts by mass and not more than 100 parts by mass, more preferably not less than 0.3 parts by mass and not more than 50 parts by mass, even more preferably not less than 0.5 parts by mass and not more than 35 parts by mass, particularly preferably not less than 0.7 parts by mass and not more than 10 parts by mass, and most preferably not less than 2 parts by mass and not more than 8 parts by mass. Moreover, from a viewpoint where, in particular, heat shrinkage resistance is more important, the content of the (c) polyester including specific structural units relative to 100 parts by mass of the (a) vinyl chloride resin is preferably not less than 0.1 parts by mass and not more than 100 parts by mass, more preferably not less than 0.3 parts by mass and not more than 50 parts by mass, even more preferably not less than 0.5 parts by mass and not more than 35 parts by mass, particularly preferably not less than 2 parts by mass and not more than 30 parts by mass, and most preferably not less than 2 parts by mass and not more than 8 parts by mass.

The total content of the (b) trimellitic acid ester and the (c) polyester including specific structural units per 100 parts by mass of the (a) vinyl chloride resin is preferably 30 parts by mass or more, more preferably 60 parts by mass or more, and even more preferably 80 parts by mass or more, and is preferably 200 parts by mass or less, more preferably 160 parts by mass or less, and even more preferably 140 parts by mass or less. When the total content of the (b) trimellitic acid ester and the (c) polyester including specific structural units is not less than any of the lower limits set forth above, low-temperature flexibility of a vinyl chloride resin molded product can be increased. Moreover, when the total content of the (b) trimellitic acid ester and the (c) polyester including specific structural units is not more than any of the upper limits set forth above, fogging characteristics and heat shrinkage resistance can be sufficiently improved.

The content of the (c) polyester including specific structural units as a proportion relative to the total content of the (b) trimellitic acid ester and the (c) polyester including specific structural units (= {content of (c) polyester including specific structural units/(content of (b) trimellitic acid ester + content of (c) polyester including specific structural units)} × 100) is preferably 0.1 mass% or more, more preferably 0.5 mass% or more, even more preferably 1 mass% or more, and particularly preferably 3 mass% or more, and is preferably 80 mass% or less, more preferably 40 mass% or less, even more preferably 10 mass% or less, and particularly preferably 8 mass% or less. When the proportional content of the (c) polyester including specific structural units is not less than any of the lower limits set forth above, heat shrinkage resistance of a vinyl chloride resin molded product can be sufficiently increased. Moreover, when the proportional content of the (c) polyester including specific structural units is not more than any of the upper limits set forth above, fogging characteristics and low-temperature flexibility of a vinyl chloride resin molded product can be sufficiently increased.

<Additives>

The presently disclosed vinyl chloride resin composition for powder molding may further contain various additives other than the components set forth above. Examples of additives that may be used include, but are not specifically limited to, components that can function as a plasticizer other than the previously described (b) trimellitic acid ester and (c) polyester including specific structural units (i.e., other plasticizers); lubricants; stabilizers such as perchloric acid-treated hydrotalcite, zeolites, β-diketones, and fatty acid metal salts; mold release agents; dusting agents other than the previously described vinyl chloride resin fine particles; impact modifiers; perchloric acid compounds other than perchloric acid-treated hydrotalcite (for example, sodium perchlorate and potassium perchlorate); antioxidants; fungicides; flame retardants; antistatic agents; fillers; light stabilizers; foaming agents; and pigments.

Components that are described in WO2016/098344A1, for example, can be used as the aforementioned additives that can be contained in the presently disclosed vinyl chloride resin composition for powder molding, and suitable amounts thereof may also be the same as described in WO2016/098344A1.

<Production method of vinyl chloride resin composition for powder molding>

The presently disclosed vinyl chloride resin composition for powder molding can be produced by mixing the components described above.

Although no specific limitations are placed on the method by which the (a) vinyl chloride resin, the (b) trimellitic acid ester, the (c) polyester including specific structural units, and various additives that are used as necessary are mixed, a method in which components other than a dusting agent (inclusive of vinyl chloride resin fine particles) are mixed by dry blending and then the dusting agent is subsequently added and mixed therewith may be adopted. The dry blending is preferably carried out using a Henschel mixer. Although the temperature during dry blending is not specifically limited, the temperature is preferably 50°C or higher, and more preferably 70°C or higher, and is preferably 200°C or lower.

<Use of vinyl chloride resin composition for powder molding>

The obtained vinyl chloride resin composition for powder molding can be used in powder molding, and can suitably be used in powder slush molding.

(Vinyl chloride resin molded product)

A feature of the presently disclosed vinyl chloride resin molded product is that it is obtained by powder molding the vinyl chloride resin composition for powder molding set forth above by any powder molding method. As a result of the presently disclosed vinyl chloride resin molded product being formed using the vinyl chloride resin composition for powder molding set forth above, the presently disclosed vinyl chloride resin molded product normally contains at least the (a) vinyl chloride resin, (b) trimellitic acid ester, and (c) polyester including specific structural units, and has excellent fogging characteristics and heat shrinkage resistance.

Therefore, the presently disclosed vinyl chloride resin molded product can suitably be used in production of a surface skin of an automobile interior component, such as an automobile instrument panel or a door trim, for which heat shrinkage and fogging are inhibited well.

<Formation method of vinyl chloride resin molded product>

In a case in which the vinyl chloride resin molded product is formed by powder slush molding, the mold temperature in powder slush molding is not specifically limited but is preferably 200°C or higher, and more preferably 220°C or higher, and is preferably 300°C or lower, and more preferably 280°C or lower.

The following method, for example, may be used in production of the vinyl chloride resin molded product without any specific limitations. In this method, the presently disclosed vinyl chloride resin composition for powder molding is sprinkled onto a mold having a temperature within any of the ranges set forth above. The vinyl chloride resin composition for powder molding is initially left for not less than 5 seconds and not more than 30 seconds and, after shaking off any excess vinyl chloride resin composition for powder molding, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-like molded product that imitates the shape of the mold is obtained.

(Laminate)

The presently disclosed laminate includes a foamed polyurethane molded product and the vinyl chloride resin molded product set forth above. The vinyl chloride resin molded product typically constitutes one surface of the laminate.

As a result of the presently disclosed laminate including a vinyl chloride resin molded product formed using the presently disclosed vinyl chloride resin composition for powder molding, the presently disclosed laminate has excellent fogging characteristics and heat shrinkage resistance, for example. Therefore, the presently disclosed laminate can suitably be used as an automobile interior material forming an automobile interior component such as an automobile instrument panel or a door trim, for example.

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while facilitating firm adhesion of the vinyl chloride resin molded product and the foamed polyurethane molded product.

EXAMPLES

The following provides a more specific description of the present disclosure based on examples. However, the present disclosure is not limited to the following examples. In the following description, "%" and "parts" used in expressing quantities are by mass, unless otherwise specified.

The following methods were used to measure and evaluate the heat shrinkage resistance, fogging characteristics, and low-temperature flexibility of a vinyl chloride resin molded product.

<Heat shrinkage resistance>

Cross marks were made at positions approximately 5 cm inward toward the center of a vinyl chloride resin sheet (dimensions: 200 × 300 mm × 1 mm) of an obtained laminate from the four corners thereof. The positions of the four marks were measured by a coordinate measuring machine (BH504 produced by Mitutoyo Corporation) with the center of each cross taken as the measurement point. As a result, the distance between adjacent marks in a longitudinal direction was found to have an average value of 248 mm and the distance between adjacent marks in a transverse direction was found to have an average value of 149 mm.

Next, the laminate was left at rest inside a Geer oven having a temperature of 120°C, the laminate was removed after 400 hours, and the positions of the measurement points (centers of the crosses) were remeasured by a coordinate measuring machine (BH504 produced by Mitutoyo Corporation). Thereafter, an average value of the distance between adjacent marks in the longitudinal direction was determined.

The average value of the distance between marks in the longitudinal direction was used to calculate the rate of heat shrinkage using the following formula.

$$\text{Rate of heat shrinkage} = \{(\text{Average value prior to loading into Geer oven} - \text{Average value after heating})/\text{Average value prior to loading into Geer oven}\} \times 100\%$$

Heat shrinkage resistance was evaluated by the following standard. A smaller rate of heat shrinkage indicates better heat shrinkage resistance.

A: Rate of heat shrinkage of 0.3% or less
B: Rate of heat shrinkage of more than 0.3% and not more than 0.4%
C: Rate of heat shrinkage of more than 0.4% and not more than 0.5%
D: Rate of heat shrinkage of more than 0.5%

<Fogging characteristics>

An obtained vinyl chloride resin molded sheet (dimensions: 145 mm × 175 mm × 1 mm) was punched out as a circle having a diameter of 80 mm, and then, using a device in accordance with the standard ISO 6452, the vinyl chloride resin molded sheet was placed in a test bottle heated to 100°C, a glass plate cooled to 20°C was set over an opening of the test bottle, and a fogging test was carried out for 3 hours. After completion of the test, the glass plate was left at rest for 1 hour at a temperature of 23°C and a humidity of 50%, and then the 60° reflectance thereof was measured using a glossiness test device (GP-60 produced by Tokyo Denshoku Co., Ltd.). The 60° reflectance of the glass plate was also measured before the test, and glossiness retention (%) of the glass plate was calculated using the following formula. Note that higher glossiness retention indicates that a vinyl chloride resin molded sheet has better fogging characteristics.

$$\text{Glossiness retention (\%)} = 100 \times [(\text{Post-test glass plate glossiness})/(\text{Pre-test glass plate glossiness})]$$

<Flexibility>

An obtained vinyl chloride resin molded sheet (dimensions: 145 mm × 175 mm × 1 mm) was punched out with dimensions of 10 mm × 40 mm, and then a loss modulus peak top temperature was measured in accordance with JIS K7244-4 with a frequency of 10 Hz, a measurement temperature range of -90°C to +100°C, and a heating rate of 2°C/min. Note that a lower peak top temperature indicates that a vinyl chloride resin molded sheet has better low-temperature flexibility.

(Production examples)

Polyesters used in the examples and comparative examples were produced as follows.

<Polyester A>

Adipic acid as a polybasic carboxylic acid, 3-methyl-1,5-pentanediol as a polyhydric alcohol, and 2-ethylhexanol as a stopper (terminal stopping component) were charged to a reactor, tetraisopropyl titanate was added as a catalyst, solvent was added as appropriate, and heating thereof was performed under stirring. Water produced as a by-product was removed at normal pressure and at reduced pressure, and the temperature was finally raised to 220°C to 230°C to complete a dehydration condensation reaction. This yielded a polyester A (viscosity: 3,600 mPa·s; number-average molecular weight: 5,300; acid value: 0.32; hydroxyl value: 14.5) including 2-ethylhexoxy groups at the terminals thereof.

<Polyester B>

Adipic acid as a polybasic carboxylic acid, 1,3-butanediol as a polyhydric alcohol, and a mixture of myristic acid and palmitic acid as a stopper (terminal stopping component) were charged to a reactor, tetraisopropyl titanate was added as a catalyst, solvent was added as appropriate, and heating thereof was performed under stirring. Water produced as a by-product was removed at normal pressure and at reduced pressure, and the temperature was finally raised to 220°C to 230°C to complete a dehydration condensation reaction. This yielded a polyester B (viscosity: 4,400 mPa·s; number-average molecular weight: 4,800; acid value: 0.24; hydroxyl value: 16.5) including tetradecanoyloxy groups and hexadecanoyloxy groups at the terminals thereof.

(Example 1)

<Production of vinyl chloride resin composition for powder molding>

With the exception of plasticizers (trimellitic acid ester, polyester A, and epoxidized soybean oil) and vinyl chloride resin fine particles used as a dusting agent, the ingredients indicated in Table 1 were loaded into and mixed in a Henschel mixer. The temperature of the mixture was raised to 80°C, at which point, all the plasticizers were added, and drying up of the mixture was caused to occur (i.e., the mixture changed to a dry state through absorption of the plasticizers by vinyl chloride resin particles used as a vinyl chloride resin). Thereafter, once the dried-up mixture had been cooled to 70°C or lower, the vinyl chloride resin fine particles used as the dusting agent were added to the mixture to produce a vinyl chloride resin composition for powder molding.

<Formation of vinyl chloride resin molded product>

A vinyl chloride resin molded sheet having dimensions of 145 mm × 175 mm × 1 mm and a vinyl chloride resin molded sheet having dimensions of 200 mm × 300 mm × 1 mm were produced as described below.

Specifically, the vinyl chloride resin composition for powder molding obtained as described above was sprinkled onto a textured mold that was heated to a temperature of 250°C and, after being left to melt for an arbitrary time, excess vinyl chloride resin composition for powder molding was shaken off. Thereafter, the textured mold onto which the vinyl chloride resin composition for powder molding had been sprinkled was placed at rest in an oven set to a temperature of 200°C, and once 60 seconds had passed after being placed at rest, the textured mold was cooled with cooling water. Once the mold temperature had dropped to 40°C, a vinyl chloride resin molded sheet was removed from the mold as a vinyl chloride resin molded product.

Fogging characteristics and low-temperature flexibility of an obtained vinyl chloride resin molded sheet (dimensions: 145 mm × 175 mm × 1 mm) were measured and evaluated by the previously described methods. The results are shown in Table 1.

<Formation of laminate>

An obtained vinyl chloride resin molded sheet (dimensions: 200 mm × 300 mm × 1 mm) was placed inside a 200 mm × 300 mm × 10 mm mold with the textured surface facing downward.

A polyol mixture was separately obtained by mixing 50 parts of a PO (propylene oxide)/EO (ethylene oxide) block adduct of propylene glycol (hydroxyl value: 28; terminal EO unit content: 10%; internal EO unit content: 4%), 50 parts of a PO/EO block adduct of glycerin (hydroxyl value: 21; terminal EO unit content: 14%), 2.5 parts of water, 0.2 parts of an ethylene glycol solution of triethylenediamine (produced by Tosoh Corporation; product name: TEDA-L33), 1.2 parts of triethanolamine, 0.5 parts of triethylamine, and 0.5 parts of a foam stabilizer (produced by Shin-Etsu Chemical Co., Ltd.; product name: F-122). The obtained polyol mixture was mixed with polymethylene polyphenylene polyisocyanate (polymeric MDI) in a ratio determined to give an index of 98 so as to prepare a mixed solution. The prepared mixed solution was poured onto the vinyl chloride resin molded sheet that had been placed in the mold as described above. Thereafter, a 340 mm × 250 mm × 2 mm aluminum plate was placed on top, and the mold was covered from above by a 348 mm × 255 mm × 10 mm aluminum plate to seal the mold. After sealing, the mold was left for 5 minutes so as to form a laminate in which a vinyl chloride resin molded sheet (thickness: 1 mm) as a surface skin was lined with a foamed polyurethane molded product (thickness: 9 mm; density: 0.18 g/cm$^3$) and an aluminum plate of 2 mm in thickness.

The formed laminate was removed from the mold, and heat shrinkage resistance of the vinyl chloride resin sheet in the laminate was measured and evaluated by the previously described method. The result is shown in Table 1.

(Examples 2 to 5)

Polyester A, a vinyl chloride resin composition for powder molding, a vinyl chloride resin molded product, and a laminate were produced in the same way as in Example 1 with the exception that the used amounts of the trimellitic acid ester and polyester A were changed as shown in Table 1. Measurements and evaluations were made in the same manner as in Example 1. The results are shown in Table 1.

(Comparative Example 1)

A vinyl chloride resin composition for powder molding, a vinyl chloride resin molded product, and a laminate were produced in the same way as in Example 1 with the exception that only the trimellitic acid ester and epoxidized soybean oil were used as plasticizers in the amounts shown in Table 1, and polyester A was not used. Measurements and evaluations were made in the same manner as in Example 1. The results are shown in Table 1.

(Comparative Example 2)

Polyester A, a vinyl chloride resin composition for powder molding, a vinyl chloride resin molded product, and a laminate were produced in the same way as in Example 1 with the exception that only polyester A and epoxidized soybean oil were used as plasticizers in the amounts shown in Table 1, and the trimellitic acid ester was not used. Measurements and evaluations were made in the same manner as in Example 1. The results are shown in Table 1.

(Comparative Example 3)

Polyester B, a vinyl chloride resin composition for powder molding, a vinyl chloride resin molded product, and a laminate were produced in the same way as in Example 1 with the exception that only polyester B and epoxidized soybean oil were used as plasticizers in the amounts shown in Table 1, and the trimellitic acid ester and polyester A were not used. Measurements and evaluations were made in the same manner as in Example 1. The results are shown in Table 1.

Table 1

| Formulation | | | Example 1 | Example 2 | Example 3 | Example 4 | Example 5 | Comparative Example 1 | Comparative Example 2 | Comparative Example 3 |
|---|---|---|---|---|---|---|---|---|---|---|
| Formulation | Vinyl chloride resin | Vinyl chloride resin particles[(1)] [parts by mass] | 100 | 100 | 100 | 100 | 100 | 100 | 100 | 100 |
| | | Vinyl chloride resin fine particles A (dusting agent)[(2)] [parts by mass] | 9 | 9 | 9 | 9 | 9 | 9 | 9 | 9 |
| | | Vinyl chloride resin fine particles B (dusting agent)[(3)] [parts by mass] | 9 | 9 | 9 | 9 | 9 | 9 | 9 | 9 |
| | Plasticizer | Trimellitic acid ester[(4)] [parts by mass] | 99 | 95 | 80 | 70 | 50 | 100 | - | - |
| | | Polyester A [parts by mass] | 1 | 5 | 20 | 30 | 50 | - | 100 | - |
| | | Polyester B [parts by mass] | - | - | - | - | - | - | - | 100 |
| | | Epoxidized soybean oil[(5)] [parts by mass] | 5 | 5 | 5 | 5 | 5 | 5 | 5 | 5 |
| | Stabilizer | Perchloric acid-treated bydrotalcite[(6)] [parts by mass] | 4.5 | 4.5 | 4.5 | 4.5 | 4.5 | 4.5 | 4.5 | 4.5 |
| | | Zeolite[(7)] [parts by mass] | 2.4 | 2.4 | 2.4 | 2.4 | 2.4 | 2.4 | 2.4 | 2.4 |
| | | Stearoylbenzoylmethane (β-diketone)[(8)] [parts by mass] | 0.5 | 0.5 | 0.5 | 0.5 | 0.5 | 0.5 | 0.5 | 0.5 |
| | | Triisodecyl phosphite[(9)] [parts by mass] | 0.3 | 0.3 | 0.3 | 0.3 | 0.3 | 0.3 | 0.3 | 0.3 |
| | | Zinc stearate[(10)] [parts by mass] | 0.2 | 0.2 | 0.2 | 0.2 | 0.2 | 0.2 | 0.2 | 0.2 |
| | Mold release agent | 12-Hydroxystearic acid[(11)] [parts by mass] | 0.4 | 0.4 | 0.4 | 0.4 | 0.4 | 0.4 | 0.4 | 0.4 |

(continued)

| | | | Example 1 | Example 2 | Example 3 | Example 4 | Example 5 | Comparative Example 1 | Comparative Example 2 | Comparative Example 3 |
|---|---|---|---|---|---|---|---|---|---|---|
| | Pigment | Black[12] [parts by mass] | 3.8 | 3.8 | 3.8 | 3.8 | 3.8 | 3.8 | 3.8 | 3.8 |
| Evaluation | Heat shrinkage resistance | | B | A | A | A | A | D | A | A |
| | Fogging characteristics [%] | | 94 | 93 | 90 | 91 | 89 | 98 | 35 | 81 |
| | Flexibility (peak top temperature) [°C] | | -43 | -42 | -39 | -39 | -32 | -40 | -23 | -18 |

(1) Product name: ZEST® (ZEST is a registered trademark in Japan, other countries, or both) 1300S (produced by suspension polymerization; average degree of polymerization: 1,300; average particle diameter: 113 $\mu$m); produced by Shin Dai-ichi Vinyl Corporation (2) Product name: ZEST PQLTX (produced by emulsion polymerization; average degree of polymerization: 800; average particle diameter: 1.8 $\mu$m); produced by Shin Dai-ichi Vinyl Corporation (3) Product name: Ryuron paste 860 (produced by emulsion polymerization; average degree of polymerization: 1,600; average particle diameter: 2 $\mu$m); produced by Tosoh Corporation (4) Product name: TRIMEX N-08; produced by Kao Corporation (5) Product name: ADK CIZER O-130S; produced by ADEKA Corporation (6) Product name: ALCAMIZER® (ALCAMIZER is a registered trademark in Japan, other countries, or both) 5; produced by Kyowa Chemical Industry Co., Ltd.

(7) Product name: MIZUKALIZER DS; produced by Mizusawa Industrial Chemicals, Ltd.

(8) Product name: Karenz DK-1; produced by Showa Denko K.K.

(9) Product name: ADK STAB SC-131; produced by ADEKA Corporation (10) Product name: SAKAI SZ2000; produced by Sakai Chemical Industry Co., Ltd.

(11) Product name: ADK STAB LS-12; produced by ADEKA Corporation (12) Product name: DA PX 1720(A) Black; produced by Dainichiseika Color and Chemicals Mfg. Co., Ltd.

It can be seen from Table 1 that a vinyl chloride resin molded product having excellent fogging characteristics and heat shrinkage resistance was obtained through the vinyl chloride resin compositions for powder molding of Examples 1 to 5.

It can also be seen from Table 1 that heat shrinkage resistance of a vinyl chloride resin molded product deteriorated in Comparative Example 1 in which the prescribed polyester was not included, and fogging characteristics of a vinyl chloride resin molded product deteriorated in Comparative Example 2 in which a trimellitic acid ester was not included. It can also be seen from Table 1 that fogging characteristics and flexibility of a vinyl chloride resin molded product deteriorated in Comparative Example 3 in which a polyester that did not include the prescribed structural units was used.

INDUSTRIAL APPLICABILITY

Through the presently disclosed vinyl chloride resin composition for powder molding, it is possible to form a vinyl chloride resin molded product having excellent fogging characteristics and heat shrinkage resistance.

Moreover, through the present disclosure, it is possible to provide a vinyl chloride resin molded product and a laminate having excellent fogging characteristics and heat shrinkage resistance.

**Claims**

1. A vinyl chloride resin composition for powder molding comprising:

   a vinyl chloride resin;
   a trimellitic acid ester; and
   a polyester including a structural unit derived from adipic acid and a structural unit derived from 3-methyl-1,5-pentanediol.

2. The vinyl chloride resin composition for powder molding according to claim 1, wherein not less than 30 parts by mass and not more than 200 parts by mass, in total, of the trimellitic acid ester and the polyester are contained per 100 parts by mass of the vinyl chloride resin.

3. The vinyl chloride resin composition for powder molding according to claim 1 or 2, wherein content of the polyester as a proportion relative to total content of the trimellitic acid ester and the polyester is not less than 0.1 mass% and not more than 80 mass%.

4. The vinyl chloride resin composition for powder molding according to any one of claims 1 to 3 used in powder slush molding.

5. A vinyl chloride resin molded product obtained through powder molding of the vinyl chloride resin composition for powder molding according to any one of claims 1 to 4.

6. The vinyl chloride resin molded product according to claim 5 for a surface skin of an automobile interior component.

7. A laminate comprising: a foamed polyurethane molded product; and the vinyl chloride resin molded product according to claim 5 or 6.

## INTERNATIONAL SEARCH REPORT

| | International application No. |
|---|---|
| | PCT/JP2019/041386 |

### A. CLASSIFICATION OF SUBJECT MATTER

B29C 41/18(2006.01)i; B32B 5/18(2006.01)i; B32B 27/30(2006.01)i; B32B 27/36(2006.01)i; B32B 27/40(2006.01)i; C08K 5/12(2006.01)i; C08L 27/06(2006.01)i; C08L 67/02(2006.01)i
FI: C08L27/06; C08L67/02; C08K5/12; B29C41/18; B32B5/18; B32B27/30 101; B32B27/36; B32B27/40

According to International Patent Classification (IPC) or to both national classification and IPC

### B. FIELDS SEARCHED

Minimum documentation searched (classification system followed by classification symbols)
C08L; C08K5/12

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 8-337700 A (ASAHI DENKA KOGYO KK.) 24.12.1996 (1996-12-24) claims, paragraphs [0014], [0036], | 1–5 |
| Y | table 1, examples | 6, 7 |
| Y | WO 2016/098343 A1 (NIPPON ZEON CO., LTD.) 23.06.2016 (2016-06-23) claims, paragraphs [0001], [0002], [0046]–[0051] | 6, 7 |
| A | JP 2016-183289 A (MITSUBISHI CHEMICAL CORP.) 20.10.2016 (2016-10-20) entire text | 1–7 |
| A | JP 9-286886 A (ASAHI DENKA KOGYO KK.) 04.11.1997 (1997-11-04) entire text | 1–7 |
| A | JP 8-59938 A (MITSUBISHI CHEMICAL CORP.) 05.03.1996 (1996-03-05) entire text | 1–7 |
| A | JP 9-31172 A (KYOWA OIL & CHEMICAL CO., LTD.) 04.02.1997 (1997-02-04) entire text | 1–7 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 January 2020 (08.01.2020) | 21 January 2020 (21.01.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

| Patent Documents referred in the Report | Publication Date | Patent Family | Publication Date |
|---|---|---|---|
| JP 8-337700 A | 24 Dec. 1996 | (Family: none) | |
| WO 2016/098343 A1 | 23 Jun. 2016 | (Family: none) | |
| JP 2016-183289 A | 20 Oct. 2016 | (Family: none) | |
| JP 9-286886 A | 04 Nov. 1997 | (Family: none) | |
| JP 8-59938 A | 05 Mar. 1996 | (Family: none) | |
| JP 9-31172 A | 04 Feb. 1997 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8291243 A
- WO 2016098344 A1